# EUROPÄISCHE PATENTSCHRIFT

(11) **EP 1 314 663 B1**
(45) Veröffentlichungstag und Bekanntmachung des Hinweises auf die Patenterteilung: **20.10.2004**
(21) Anmeldenummer: 01811149.2
(22) Anmeldetag: 27.11.2001
(51) Int. Cl.: B65G 47/26, B65G 13/07, B65G 13/071

(54) **Staudrucklose Staurollenbahn**
Pressureless accumulating roller conveyor
Convoyeur accumulateur à rouleaux permettant une accumulation sans pression

(43) Veröffentlichungstag der Anmeldung: 28.05.2003
(73) Patentinhaber: Hirschi & Co AG, 3018 Bern (CH)
(72) Erfinder: Piana, Rolf, 3280 Murten (CH)
(74) Vertreter: BOVARD AG - Patentanwälte

(56) Entgegenhaltungen:
- EP-A- 1 132 321

## Beschreibung

Die Erfindung betrifft eine staudrucklose Rollenbahn, mit einer Mehrzahl von in Förderrichtung hintereinander angeordneten, zylindrischen Rollen, mit einem unter den Rollen angeordneten endlosen Zugmittel, das über Umlenkrollen geführt und angetrieben wird, wobei die Rollenbahn in Abschnitte gegliedert ist, die in Förderrichtung hintereinander angeordnet sind und von denen jeder unabhängig mit dem endlosen Zugmittel antriebsmässig verbindbar ist.

Staudrucklose Rollenbahnen, auch Staurollenförderer genannt, sind mit Rollen bestückte Förderbahnen, die in der Lage sind, beim Fördern von Stückgut das Aneinanderstossen des geförderten Gutes zu vermeiden. Es gibt empfindliches Fördergut, bei dem darauf zu achten ist, dass jeglicher Druck durch Aneinanderstossen vermieden wird. Eine weit verbreitete Massnahme, mit der dies erreicht wird, besteht im Aufteilen der Transportbahn in einzeln antreibbare Abschnitte und im Abschalten einzelner angetriebener Abschnitte. Gleichzeitig muss dafür gesorgt werden, dass die sich im Leerlauf weiterdrehenden Rollen so rasch wie möglich zum Stillstand gelangen. Dafür sind Bremseinrichtungen notwendig. Anstelle einzelner Motoren zum Antrieb der Abschnitte der Rollenbahn ist bevorzugt ein unter der Rollenbahn laufender Flachriemen vorgesehen, mit dem die einzelnen Abschnitte bedarfsweise durch Kupplungen verbunden werden können. Das Betätigen der Kupplungen und Bremsen erfordert einen erheblichen Aufwand, insbesondere dann, wenn das Betätigen mit Hilfe von Druckluft durchgeführt wird. Anlagen dieser Art sind weder montagefreundlich noch wartungsarm.

Ausgehend von diesem Stand der Technik liegt der Erfindung die Aufgabe zu Grunde, eine staudrucklose Rollenbahn vorzuschlagen, die einfach aufgebaut und kostengünstig herstellbar ist, bei der sowohl das Ein- und Auskuppeln als auch das Bremsen der einzelnen Abschnitte sehr einfach steuerbar ist und die somit einfach und wartungsarm betrieben werden kann.

Diese Aufgabe wird erfindungsgemäss dadurch gelöst, dass unter den Rollen eine Kupplungs-Brems-Einheit angeordnet ist, die eine Antriebsrolle aufweist, die dauernd durch das Zugmittel rotierend angetrieben wird, dass mit der Antriebsrolle eine Kupplungsscheibe drehfest verbunden ist, dass auf einer Seite der Kupplungsscheibe ein nicht rotierbarer elektrisch betätigbarer Kupplungsmagnet angeordnet ist, dass auf der dem Kupplungsmagneten gegenüberliegenden Seite der Kupplungsscheibe eine rotierbare Übertragungsscheibe angeordnet ist, die über eine Welle mit einer Abtriebsrolle verbunden ist, wobei die Welle innerhalb der Antriebsrolle drehbar gelagert ist und wobei die Abtriebsrolle durch ein weiteres endloses Zugmittel mit mindestens einer der Rollen verbunden ist, dass auf der der Kupplungsscheibe gegenüberliegenden Seite der Übertragungsscheibe eine nicht rotierbare Bremsscheibe angeordnet ist, und dass auf der von der Übertragungsscheibe abgewandten Seite der Bremsscheibe ein nicht rotierbarer elektrisch betätigbarer Bremsmagnet angeordnet ist.

Diese Lösung hat die Vorteile, dass dadurch Rollenbahnen sehr einfach und kostengünstig zusammengestellt werden können. Pneumatische Zylinder und Leitungen, wie sie bei bekannten Staurollenförderem erforderlich sind, entfallen und es muss auch nicht jeder Abschnitt einen separaten Motor aufweisen. Statt dessen genügt es, die einzelnen Abschnitte mit elektrischen Leitern auszurüsten, um die betreffenden Kupplungs-Brems-Einheiten ansteuern zu können. Auch entfallen bei der erfindungsgemässen Lösung Schleifringe, wie sie zum Speisen rotierender Elektromagneten bekannter Kupplungs- und Bremsvorrichtungen notwendig sind.

Nach einer besonderen Ausführungsart der Erfindung ist an der Übertragungsscheibe ein der Kupplungsscheine zugewandter Kupplungsbelag und ein der Bremsscheibe zugewandter Bremsbelag angeordnet, wobei der Kupplungsbelag und der Bremsbelag gegenüber der Übertragungsscheibe axial verschiebbar sind. Diese Ausführungsart erlaubt es, die durch die Elektromagnete bewegten Massen gering zu halten und die Übertragungsscheibe selbst axial unbeweglich zu lagern.

Nach einer anderen Ausführungsart ist das Zugmittel als Flachriemen ausgebildet. Dadurch können praktisch beliebig viele Kupplungs-Brems-Einheiten entlang der Rollenbahn in einfachster Weise durch das Zugmittel angetrieben werden, indem deren Antriebsrollen mit dem Flachriemen in Kontakt gebracht werden.

Eine weitere Ausführungsart der Erfindung sieht vor, das weitere Zugmittel als Rundriemen auszubilden. Damit können die Rollen in sehr einfacher Weise mit einer oder mehreren die Rundriemen aufnehmenden und führenden Rillen ausgestaltet werden, um sie einerseits mit der Abtriebsrolle der Kupplungs-Brems-Einheit und andererseits mit benachbarten Rollen zu verbinden.

Gemäss einer besonders bevorzugten Ausführungsart der Erfindung ist eine Tragplatte vorhanden, in welcher die Antriebsrolle gelagert ist, an welcher der Kupplungsmagnet befestigt ist und an welcher über ein Halteteil der Bremsmagnet und die Bremsscheibe befestigt sind. Somit werden alle Teile der Kupplungs-Brems-Einheit durch die Tragplatte getragen, welche ihrerseits sehr einfach an einer beliebigen Stelle einer Rollenbahn befestigt werden kann.

Wenn nach einer weiteren Ausführungsart an der Tragplatte mindestens eine Führungsrolle zum Führen des Zugmittels und zum Anpressen des Zugmittels an die Antriebsrolle angeordnet ist, wird gewährleistet, dass das Zugmittel stets mit der Antriebsrolle in Kontakt bleibt.

Die Erfindung wird nachstehend anhand eines Ausführungsbeispiels unter Bezugnahme auf die beiliegenden Zeichnungen erläutert. Es zeigt
- Figur 1: eine schematische Seitenansicht einer Rollenbahn,
- Figur 2: eine schematische Ansicht von oben auf die Rollenbahn und
- Figur 3: eine Schnittansicht einer Kupplungs-Brems-Einheit.

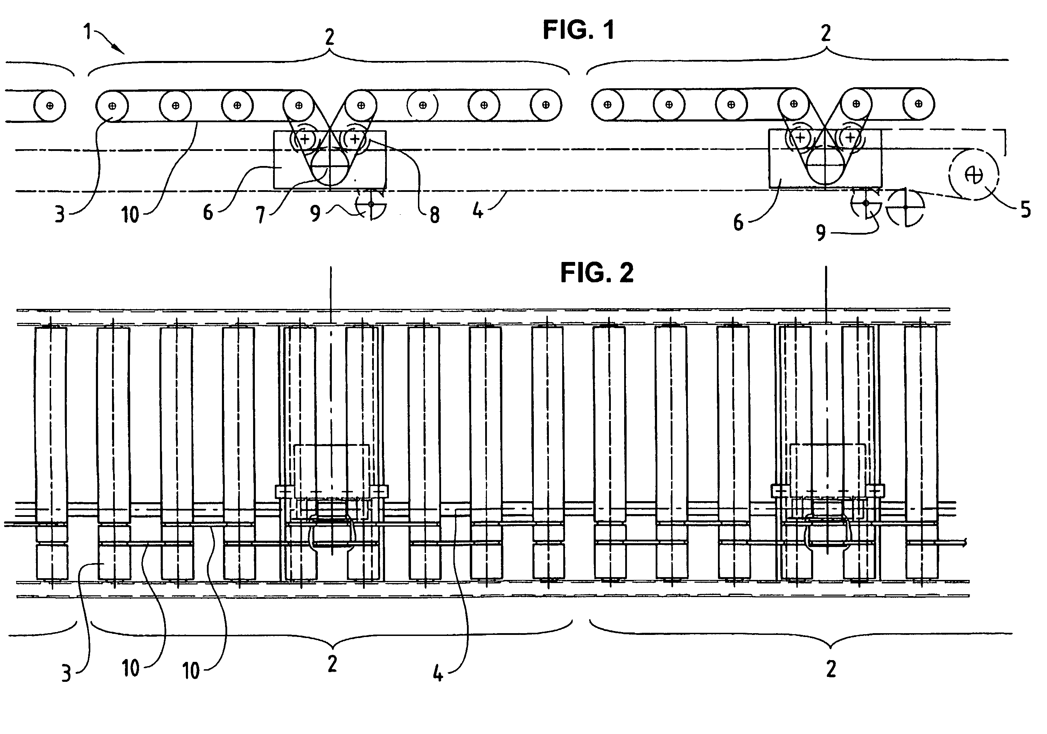

Die Figuren 1 und 2 zeigen ein Ausführungsbeispiel einer erfindungegsmässen Rollenbahn 1 im Auf- beziehungsweise Grundriss. Wie durch Klammern gezeigt, ist die Rollenbahn 1 in mehrere in Transportrichtung hintereinander liegende Abschnitte 2 unterteilt. Jeder Abschnitt 2 umfasst eine Anzahl Rollen 3 zum Transport von Artikeln. Der Antrieb der einzelnen Rollen 3 aller Abschnitte 2 erfolgt mit einem gemeinsamen Flachriemen 4, wie dies weiter unten noch eingehend erläutert werden wird. Der Flachriemen 4 ist unterhalb der Rollen 3 angeordnet und bewegt sich dauernd entlang aller Abschnitte 2 der Rollenbahn 1. Er wird an beiden Enden der Rollenbahn 1 mit Umlenkrollen 5 umgelenkt, von denen in den Figuren 1 und 2 nur eine dargestellt ist. Eine dieser Umlenkrollen 5 dient auch zum Antreiben des Flachriemens 4. Tragrollen 9 unterstützen das untere Trum des Flachriemens 4. Anstelle des Flachriemens 4 könnte selbstverständlich irgend ein anderes endloses Zugmittel vorgesehen werden, beispielsweise ein Zahnriemen, ein Keilriemen, ein Rundriemen oder eine Kette.

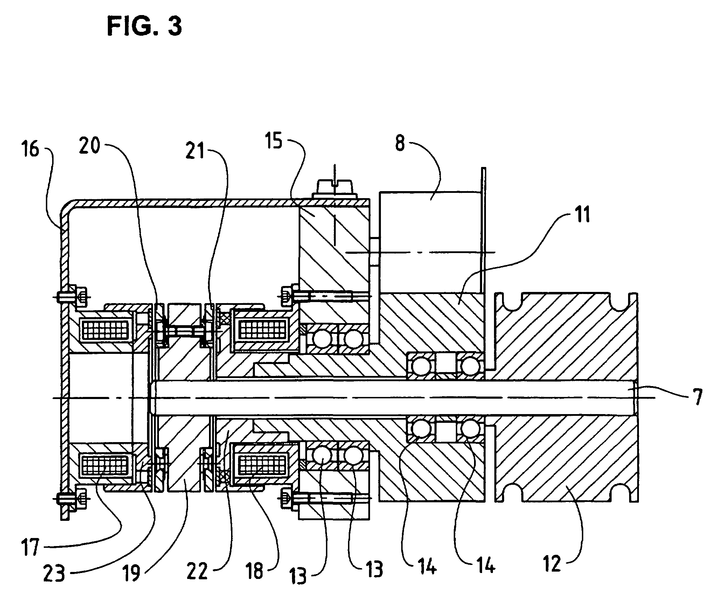

Jedem Abschnitt 2 der Rollenbahn 1 ist eine Kupplungs-Brems-Einheit 6 zugeordnet, von denen Figur 3 eine in einer geschnittenen Ansicht zeigt. Die Einheit 6 ist mittels einer Tragplatte 15 mit der Rollenbahn 1 verbunden. Eine Antriebsrolle 11, die mit Lagern 13 frei drehbar in der Tragplatte 15 gehalten ist, steht in ständigem Kontakt mit dem Flachriemen 4, welcher durch zwei Führungsrollen 8 geführt und unter einer leichten Umlenkung an die Antriebsrolle 11 gepresst wird. Mit der Antriebsrolle 11 ist eine Kupplungsscheibe 22 drehfest verbunden. Innerhalb der Antriebsrolle 11 ist eine Welle 7 mit Hilfe von Lagern 14 frei drehbar gelagert. Die Welle 7 trägt an ihrem in der Figur rechten Ende eine Abtriebsrolle 12, an deren Umfang zwei Rillen zur Aufnahme von Rundriemen 10 angeordnet sind. Mit den in den Figuren 1 und 2 sichtbaren Rundriemen 10 werden die einzelnen Rollen 3 angetrieben. An Stelle des Rundriemens 10 könnte selbstverständlich irgend ein anderes endloses Zugmittel vorgesehen werden, beispielsweise ein Zahnriemen, ein Keilriemen, ein Flachriemen oder eine Kette. Ein Rundriemen eignet sich aber besonders gut, um die einzelnen Rollen 3 antriebsmässig miteinander zu verbinden, weil in den Rollen 3 lediglich eine Nut erforderlich ist, um den Riemen aufzunehmen und zu führen. Am anderen Ende der Welle 7 ist eine Übertragungsscheibe 19 befestigt, die an ihren zwei einander gegenüberliegenden Flächen einen Bremsbelag 20 und einen Kupplungsbelag 21 trägt. Sowohl der Bremsbelag 20 als auch der Kupplungsbelag 21 sind gegenüber der Übertragungsscheibe 19 axial beweglich. Ein an der Tragplatte 15 befestigtes Halteteil 16 trägt einen Bremsmagneten 17 und eine mit diesem unbeweglich verbundene Bremsscheibe 23, derart, dass die Bremsscheibe 23 dem Bremsbelag 20 der Übertragungsscheibe 19 mit geringem Abstand gegenüberliegt. Dem Kupplungsbelag 21 der Übertragungsscheibe 19 liegt die genannte Kupplungsscheibe 22 ebenfalls mit geringem Abstand gegenüber. An der von der Übertragungsscheibe 19 abgewandten Seite der Kupplungsscheibe 22 ist ein Kupplungsmagnet 18 angeordnet und an der Tragplatte 15 befestigt. Der Bremsmagnet 17 und der Kupplungsmagnet 18 sind als Elektromagneten mit koaxial zur Achse 7 angeordneten, ringförmigen Spulen ausgebildet.

Die vorangehend beschriebene Kupplungs-Brems-Einheit 6 funktioniert wie folgt. In der in Figur 3 dargestellten Leerlaufposition ist der Kupplungsmagnet 18 und der Bremsmagnet 17 stromlos. Wie man sieht, ist sowohl zwischen der Übertragungsscheibe 19 und der Kupplungsscheibe 22 als auch zwischen der Übertragungsscheibe 19 und der Bremsscheibe 23 ein Abstand vorhanden. Diese Abstände sind in der Figur der besseren Erkennbarkeit wegen etwas übertrieben dargestellt. In der Praxis haben sich 0,2 Millimeter als ausreichend erwiesen. Somit ist die Übertragungsscheibe 19 mitsamt der drehfest mit ihr verbundenen Welle 7 und dem an deren anderem Ende befestigten Abtriebsrolle 12 frei drehbar, während die Antriebsrolle 11 und die mit ihr verbundene Kupplungsscheibe 22 sich in Folge des Kontaktes der Antriebsrolle 11 mit dem Flachriemen 4 drehen. Auch die mit der Abtriebsrolle 12 durch die Rundriemen 10 verbundenen Rollen 3 können sich in dieser Leerlaufposition frei drehen. Der Kupplungsbelag 21 und der Bremsbelag 20 sind mit der Übertragungsscheibe 19 drehfest verbunden, aber gegenüber dieser axial verschiebbar. Sie werden durch nicht dargestellte Federn in der in Figur 3 dargestellten Lage gehalten und sind aus dieser Lage um einen Betrag von der Übertragungsscheibe 19 weg bewegbar.

Wenn die Rollen 3 angetrieben werden sollen, wird der Kupplungsmagnet 18 mit Spannung versorgt und dadurch erregt. Der axial bewegliche Kupplungsbelag 21, welcher ein ferromagnetisches Material enthält oder auf einer Scheibe aus einem solchen Material befestigt ist, wird vom Kupplungsmagneten 18 angezogen und kommt in Kontakt mit der rotierenden Kupplungsscheibe 22, wodurch die Übertragungsscheibe 19 ebenfalls in Rotation versetzt wird. Die Rollen 3 des betreffenden Abschnittes 2 der Rollenbahn 1 werden somit über die Welle 7, die Abtriebsrolle 12 und die Rundriemen 10 angetrieben.

Wenn die Rollen 3 gebremst und dadurch die auf ihnen transportierten Gegenstände angehalten werden sollen, wird der Bremsmagnet 17 mit Spannung versorgt und dadurch erregt. Der axial bewegliche Bremsbelag 20, welcher ein ferromagnetisches Material enthält oder auf einer Scheibe aus einem solchen Material befestigt ist, wird vom Bremsmagneten 17 angezogen und kommt in Kontakt mit der feststehenden Bremsscheibe 23, wodurch die Übertragungsscheibe 19 zum Stillstand kommt. Die Rollen 3 des betreffenden Abschnittes 2 der Rollenbahn 1 werden somit über die Welle 7, die Abtriebsrolle 12 und die Rundriemen 10 angehalten.

Nach diesem Konzept aufgebaute Rollenbahnen werden bevorzugt in der Lager- und Sortiertechnik eingesetzt, beispielsweise bei kurzen, zentral angetriebenen Taktstrecken und bei Sortierausschleusvorrichtungen.

## Patentansprüche

1. Staudrucklose Rollenbahn (1), mit einer Mehrzahl von in Förderrichtung hintereinander angeordneten, zylindrischen Rollen (3), mit einem unter den Rollen (3) angeordneten endlosen Zugmittel (4), das über Umlenkrollen (5) geführt und angetrieben wird, wobei die Rollenbahn (1) in Abschnitte (2) gegliedert ist, die in Förderrichtung hintereinander angeordnet sind und von denen jeder unabhängig mit dem endlosen Zugmittel (4) antriebsmässig verbindbar ist, **dadurch gekennzeichnet, dass** unter den Rollen (3) eine Kupplungs-Brems-Einheit (6) angeordnet ist, die eine Antriebsrolle (11) aufweist, die dauernd durch das Zugmittel (4) rotierend angetrieben wird, dass mit der Antriebsrolle (11) eine Kupplungsscheibe (22) drehfest verbunden ist, dass auf einer Seite der Kupplungsscheibe (22) ein nicht rotierbarer elektrisch betätigbarer Kupplungsmagnet (18) angeordnet ist, dass auf der dem Kupplungsmagneten (22) gegenüberliegenden Seite der Kupplungsscheibe eine rotierbare Übertragungsscheibe (19) angeordnet ist, die über eine Welle (7) mit einer Abtriebsrolle (12) verbunden ist, wobei die Welle (7) innerhalb der Antriebsrolle (11) drehbar gelagert ist und wobei die Abtriebsrolle (12) durch ein weiteres endloses Zugmittel (10) mit mindestens einer der Rollen (3) verbunden ist, dass auf der der Kupplungsscheibe (22) gegenüberliegenden Seite der Übertragungsscheibe (19) eine nicht rotierbare Bremsscheibe (23) angeordnet ist, und dass auf der von der Übertragungsscheibe (19) abgewandten Seite der Bremsscheibe (23) ein nicht rotierbarer elektrisch betätigbarer Bremsmagnet (17) angeordnet ist.

2. Staudrucklose Rollenbahn (1) nach Anspruch 1, **dadurch gekennzeichnet, dass** an der Übertragungsscheibe (19) ein der Kupplungsscheibe (22) zugewandter Kupplungsbelag (21) und ein der Bremsscheibe (23) zugewandter Bremsbelag (20) angeordnet sind, wobei der Kupplungsbelag (21) und der Bremsbelag (20) gegenüber der Übertragungsscheibe (19) axial verschiebbar sind.

3. Staudrucklose Rollenbahn (1) nach einem der vorangehenden Ansprüche, **dadurch gekennzeichnet, dass** das Zugmittel (4) ein Flachriemen ist.

4. Staudrucklose Rollenbahn (1) nach einem der vorangehenden Ansprüche, **dadurch gekennzeichnet, dass** das weitere Zugmittel (10) ein Rundriemen ist.

5. Staudrucklose Rollenbahn (1) nach einem der vorangehenden Ansprüche, **dadurch gekennzeichnet, dass** eine Tragplatte (15) vorhanden ist, in welcher die Antriebsrolle (11) gelagert ist, an welcher der Kupplungsmagnet (18) befestigt ist und an welcher über ein Halteteil (16) der Bremsmagnet (17) und die Bremsscheibe (23) befestigt sind.

6. Staudrucklose Rollenbahn (1) nach Anspruch 5, **dadurch gekennzeichnet, dass** an der Tragplatte mindestens eine Führungsrolle (8) zum Führen des Zugmittels (4) und zum Anpressen des Zugmittels (4) an die Antriebsrolle angeordnet ist.

## Claims

1. Pressureless roller conveyor (1), with a plurality of cylindrical rollers (3) disposed behind one another in conveying direction, with an endless pulling means (4), disposed under the rollers (3), which is guided and driven via deflection rollers (5), the roller conveyor (1) being divided into sections (2) which are disposed behind one another in conveying direction and each of which is independently connectible, with respect to drive, to the endless pulling means (4), **characterised in that** disposed under the rollers (3) is a coupling-braking unit (6) which has a drive roller (11) that is continuously driven rotatingly by the pulling means (4), **in that** a coupling disk (22) is connected in a torque-proof way to the drive roller (11), **in that** a non-rotatable coupling magnet (18), able to be actuated electrically, is disposed on one side of the coupling disk (22), **in that** disposed on the side of the coupling disk opposite the coupling magnet (22) is a rotatable transmission disk (19) which is connected via a shaft (7) to a drive roller (12), the shaft (7) being rotatably borne inside the drive roller (11) and the drive roller (12) being connected to at least one of the rollers (3) by a further endless pulling means (10), **in that** disposed on the side of the transmission disk (19) opposite the coupling disk (22) is a non-rotatable brake disk (23), and **in that** disposed on the side of the brake disk (23) remote from the transmission disk (19) is a non-rotatable brake magnet (17), able to be actuated electrically.

2. Pressureless roller conveyor (1) according to claim 1, **characterised in that** disposed on the transmission roller (19) is a coupling covering (21) facing the coupling disk (22) and a brake covering (20) facing the brake disk (23), the coupling covering (21) and the brake covering (20) being axially displaceable with respect to the transmission disk (19).

3. Pressureless roller conveyor (1) according to one of the preceding claims, **characterised in that** the pulling means (4) is a flat belt.

4. Pressureless roller conveyor (1) according to one of the preceding claims, **characterised in that** the further pulling means (10) is a circular belt.

5. Pressureless roller conveyor (1) according to one of the preceding claims, **characterised in that** there is a supporting plate (15) in which the drive roller (11) is borne, to which the coupling magnet (18) is fixed and to which, via a holding part (16), the brake magnet (17) and the brake disk (23) are fixed.

6. Pressureless roller conveyor (1) according to claim 5, **characterised in that** disposed on the supporting plate is at least one guide roller (8) for guiding the pulling means (4) and for pressing the pulling means (4) on the drive roller.

## Revendications

1. Convoyeur accumulateur à rouleaux sans pression dynamique (1) ) avec une pluralité de rouleaux cylindriques 83) disposés dans le sens de transport les uns derrière les autres, avec un moyen de traction sans fin (4) disposé sous les rouleaux 83), moyen de traction qui est guidé et entraîné par des poulies de renvoi (5), le convoyeur accumulateur (1) étant articulé en sections (2) qui sont disposées les unes derrière les autres dans le sens de transport et dont chacune est reliable indépendamment à un moyen de traction sans fin (4) en entraînement, **caractérisé en ce que** en dessous des rouleaux (3), il est disposé une unité de freinage (6) d'accouplement qui présente une poulie motrice (11) entraînée en rotation par le moyen de traction (4), **en ce que** un disque d'accouplement (22) est reliée fixement en rotation à la poulie motrice (11), **en ce que** sur le côté opposé du disque d'accouplement, il est disposé un aimant d'accouplement (18) non rotatif à entraînement électrique (18), **en ce que** sur le côté opposé à l'aimant d'accouplement (22), du disque d'accouplement, il est disposé un disque de transmission (19) qui est relié à une poulie de force descensionnelle par un arbre (7), l'arbre (7) étant logé en rotation à l'intérieur de la poulie motrice , et la poulie de forces descensionnelle étant reliée par au moins un moyen de traction (10) à au moins l'un des rouleaux (3), **en ce que** sur la face du disque de transmission (199, opposée au disque d'accouplement (22), il et disposé un disque de freinage non rotatif (29) et **en ce qu'**il est disposé sur la face détournée du disque de transmission (19)m du disque de freinage (239, un aimant de freinage (17) non rotatif actionnable électriquement.

2. Convoyeur accumulateur à rouleaux sans pression dynamique (1), selon la revendication 1, **caractérisé en ce qu'**une garniture d'accouplement (21) tournée vers le disque d'accouplement (22) et une garniture de frein (20) tournée vers le disque de freinage (23) sont disposées sur le disque de transmission (19), la garniture d'accouplement (21) et la garniture de frein (20) étant axialement mobile par rapport au disque de transmission.

3. Convoyeur accumulateur à rouleaux sans pression dynamique (1) selon l'une des revendications précédente, **caractérisé en ce que** le moyen de traction (4) est une courroie plate.

4. Convoyeur accumulateur à rouleaux sans pression dynamique (1) selon l'une des revendications précédente, **caractérisé en ce que** l'autre moyen de traction (10) est une courroie ronde.

5. Convoyeur accumulateur à rouleaux sans pression dynamique (1) selon l'une des revendications précédente, **caractérisé en ce qu'**une plaque de support (15) est présente, dans laquelle est logée la poulie motrice (11) sur laquelle est fixée l'aimant d'accouplement (18) et sur laquelle sont fixés l'aimant de freinage (179 et le disque de freinage (23) par une pièce de fixation (16).

6. Convoyeur accumulateur à rouleaux sans pression dynamique (1) selon la revendication 5, **caractérisé en ce qu'**un rouleau de guidage (8) est disposé sur la plaque support pour le guidage du moyen de traction (4) et pour la pression du moyen de traction (4) contre la poulie motrice.
